(19) **Europäisches Patentamt / European Patent Office / Office européen des brevets**

(11) **EP 2 195 949 B1**

(12) **EUROPEAN PATENT SPECIFICATION**

(45) Date of publication and mention
of the grant of the patent:
**31.08.2011  Bulletin 2011/35**

(21) Application number: **08759197.0**

(22) Date of filing: **11.06.2008**

(51) Int Cl.:
*H04J 3/06* (2006.01)

(86) International application number:
**PCT/EP2008/004692**

(87) International publication number:
**WO 2009/030292 (12.03.2009 Gazette 2009/11)**

(54) **METHOD, COMPUTER PROGRAM PRODUCT AND SYSTEM FOR THE TICK SYNCHRONIZATION OF NODES IN A WIRELESS MULTI-HOP NETWORK**

VERFAHREN, COMPUTERPROGRAMMPRODUKT UND SYSTEM ZUR TICK-SYNCHRONISATION VON KNOTEN IN EINEM DRAHTLOSEN MEHRSTRECKENNETZWERK.

PROCEDE, PROGRAMME INFORMATIQUE ET SYSTEME DE SYNCHRONISATION PAR TICS DE N UDS DANS UN RESEAU A SAUTS MULTIPLES SANS FIL

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **05.09.2007  EP 07017409**

(43) Date of publication of application:
**16.06.2010  Bulletin 2010/24**

(73) Proprietor: **Technische Universität Kaiserslautern
67663 Kaiserslautern (DE)**

(72) Inventors:
• **GOTZHEIN, Reinhard**
**67661 Kaiserslautern (DE)**
• **KUHN, Thomas**
**67657 Kaiserslautern (DE)**

(74) Representative: **Müller-Boré & Partner
Patentanwälte
Grafinger Straße 2
81671 München (DE)**

(56) References cited:
**WO-A-2006/056174     WO-A-2006/067271
US-A1- 2006 072 694**

• **THOMAS KUHN: "MacZ- a QoS MAC Layer for Ambient Intelligence Systems" 7 May 2006 (2006-05-07), UNIVERSITY OF KAISERSLAUTERN , XP001537666 paragraph [002.]**

• **ZHIJUN SHANG ET AL: "A low overhead multi-hop time-sync protocol for wireless sensor networks" 19 March 2005 (2005-03-19), NETWORKING, SENSING AND CONTROL, 2005. PROCEEDINGS. 2005 IEEE TUCSON, AZ, USA MARCH 19-22, 2005, PISCATAWAY, NJ, USA, IEEE, PAGE(S) 54 - 59 , XP010813246 ISBN: 978-0-7803-8812-3 abstract paragraphs [00I.], [0II.], [III.], [0IV.]**

• **HORACIO A B F DE OLIVEIRA ET AL: "Localization in Time and Space for Sensor Networks" 1 May 2007 (2007-05-01), ADVANCED NETWORKING AND APPLICATIONS, 2007. AINA '07. 21ST INTERN ATIONAL CONFERENCE ON, IEEE, PI, PAGE(S) 539 - 546 , XP031095344 ISBN: 978-0-7695-2846-5 paragraphs [0II.], [IVA.]**

• **HYOJUNG LEE ET AL: "Efficient RBS in Sensor Networks" 10 April 2006 (2006-04-10), INFORMATION TECHNOLOGY: NEW GENERATIONS, 2006. ITNG 2006. THIRD INTERN ATIONAL CONFERENCE ON LAS VEGAS, NV, USA 10-12 APRIL 2006, PISCATAWAY, NJ, USA, IEEE, PAGE(S) 279 - 284 , XP010911368 ISBN: 978-0-7695-2497-9 the whole document**

• **PHILIPP BECKER ET AL: "MacZ - A Quality-of-Service MAC Layer for Ad-hoc Networks" 1 September 2007 (2007-09-01), HYBRID INTELLIGENT SYSTEMS, 2007. HIS 2007. 7TH INTERNATIONAL CONFERENCE ON, IEEE, PISCATAWAY, NJ, USA, PAGE(S) 277 - 282 , XP031142844 ISBN: 978-0-7695-2946-2 the whole document**

**Description**

The present invention relates to methods for the tick synchronization of a node of a wireless multi-hop network with at least one other node of said multi-hop network and a system for the tick synchronization of nodes in a multi-hop network. Moreover, the present invention relates to methods for the time synchronization of a node of a wireless multi-hop network

There is a difference between tick synchronization and time synchronization. For time synchronization, two pieces of information are needed: a reference point in time and a clock value, which are both updated periodically. Tick synchronization is concerned with establishing reference points in time only - also called reference ticks - among the nodes of a network. Different from time synchronization, no clock values are exchanged. Tick synchronization is sufficient, e.g. for network-wide medium slotting, where only common reference points in time are required. Based on tick synchronization, time synchronization can be achieved by one exchange of a clock value among the nodes of a network, referring to a reference point in time.

Time synchronization is a crucial aspect for the operation of distributed systems in general, and of ad hoc networks in particular. Ad hoc networks form dynamically, and consist e.g. of a set of small, low power nodes communicating via radio links. Network-wide accurate time in ad hoc networks enables many distributed applications like e.g. data fusion in wireless sensor networks, networked control systems, duty cycling in wireless sensor networks, and multi-hop medium slotting in wireless ad hoc networks.

According to one known method for time-synchronizing such a network, the structure of the network is determined and stored. Afterwards, a tree for performing the synchronization is calculated and the synchronization is performed according to the structure given in the tree. However, if the topology of the network changes, when e.g. one node moves, the tree structure needs to be newly calculated.

According to another known method for time-synchronizing a network, each node of the network synchronizes with all nodes in the vicinity of this node. This however, can lead to high complexity and very long synchronization times as the size of the network increases. Moreover, the susceptibility for collisions in dense networks adversely affects the operability this synchronization method.

Details of known synchronization methods will be described below.

Reference Broadcast Synchronization (RBS) (J. Elson, L. Girod, D. Estrin: Fine-Grained Network Time Synchronization using Reference Broadcasts, in: Proceedings of the Fifth Symposium on Operating Systems Design and Implementation (OSDI 2002), Boston, MA, USA, December 2002) exploits the property of broadcast media that nodes within single-hop distance of a sender receive a MAC layer frame at approximately the same time. By recording the reception times of reference beacon frames and exchanging their observations, receivers can compute their mutual clock offsets. Multi-hop synchronization is achieved using time routing through clock conversion. Using statistical methods, RBS achieves very high average accuracy, which is validated by a series of experiments. RBS requires dynamic (re-)election of sender nodes with network coverage. To synchronize them, too, redundant sender nodes and a sufficiently dense network topology are needed.

The Timing-Sync Protocol for Sensor Networks (TPSN) (S. Ganeriwal, R. Kumar, M. B. Srivastava: Timing-sync Protocol for Sensor Networks, SenSys'03, Los Angeles, CA, USA, November 5-7, 2003) performs iterative sender-receiver synchronization w. r. t. one reference node, using late time-stamping. The protocol works in two phases. In the level discovery phase, reference node election and establishment of a hierarchical network structure by means of a global broadcast take place. In the (re-) synchronization phase, all nodes along this hierarchy perform a pair wise synchronization by handshakes. As shown experimentally, TPSN achieves very high average accuracy. The use of handshakes provides some protection against frame collisions and node failures.

The Tiny-Sync Protocol (TSP) (M. L. Sichitiu, C. Veerarittiphan: Simple, Accurate Time Synchronization for Wireless Networks, Proceedings of the IEEE Wireless Communications and Networking Conference (WCNC 2003), New Orleans, LA, USA, pp. 1266-1273, 2003) uses probe handshakes that are time-stamped at each send/receive point, yielding a data point. Based on collected data points, two nodes can estimate their clock offset and their clock skew within deterministic bounds. For network-wide synchronization, a (logically) hierarchical topology that determines all pairs of nodes to be synchronized has to be established. This and a high convergence delay restrict the applicability of TSP in case of node mobility.

The Time-Diffusion Protocol (TDP) (W. Su, I. Akyildiz: Time-Diffusion Synchronization Protocols for Sensor Networks, IEEE/ACM Transactions on Networking, Vol. 13, No. 2, pp. 384-397, April 2005) is a collection of many protocols that together achieve network-wide time synchronization in mobile ad hoc networks with high accuracy. To deal with clock skew, TDP resynchronizes all network nodes periodically. Each period starts with the reelection of master nodes, which then repeatedly diffuse timing information that is forwarded by diffused-leader nodes. Since master nodes are reelected in each period, TDP is robust against topology changes. However, both communication complexity and convergence delay are high.

BitMAC: A Deterministic, Collision-Free, and Robust MAC Protocol for Sensor Networks (M. Ringwald, K.

Römer) describes a method which enables concurrent multiple access to a communication channel.

Syncob: Collaborative Time Synchronization in Wireless Sensor Networks (A. Krohn, M. Beigl, Ch. Decker, T. Riedel) describes a method for time synchronizing an arbitrary number of nodes in a distributed setting.

WO 2006/056174 A1 discloses a synchronization and data transmission method in which a node is synchronized to the beginning of a frame of a synchronizing signal. In the synchronizing signal there is transmitted a hop count value which is used for finding the optimal route to the central node of the network.

WO 2006/067271 A1 discloses a method for time synchronizing a network. A hop count value is transmitted, said hop count value being used as an indication of the precision of the received reference time.

US 2006/0072694 A1 discloses a method for synchronizing clocks in wireless personal area networks. A time of a clock of a transmitter is transmitted to the receiving nodes which adjust their clocks using the time of the clock of the transmitter.

It is an object of the present invention, to provide a method for tick-synchronizing a node of a wireless multi-hop network with at least one other node of said multi-hop network, a computer program product and a system for tick-synchronizing nodes in a multi-hop network as well as a method for time-synchronizing a node of a wireless multi-hop network with at least one other node of said multi-hop network enabling a fast tick synchronization of said network having low complexity.

This object is achieved by a method having the features disclosed in claim 1 or claim 15, a computer program product having the features disclosed in claim 13 and a system having the features disclosed in claim 14. Preferred embodiments are defined in the dependent claims.

The described methods can in particular be applied to wireless ad hoc networks. A wireless ad hoc network is a computer network in which the nodes communicate via radio links. The network is called ad hoc because it forms dynamically, without infrastructure, from a set of nodes with matching communication facilities.

According to one example there is provided a method for tick-synchronizing a node of a wireless multi-hop network with at least one other node of said multi-hop network during a synchronization phase, wherein a synchronization phase comprises at least one round, said network comprising a plurality of nodes being arbitrarily connected, said method comprising the steps of:

receiving a synchronization tick frame from a node,
determining a node reference tick $t_{syncNode}$ using a round number $n_{round}$ and the start time $t_{rxTick}$ of receipt of said synchronization tick frame in said node,

wherein said round number $n_{round}$ is indicative of the current round of said synchronization phase.

Tick synchronization establishes global reference points in time - also called reference ticks - among a set of nodes or processes. To achieve tick synchronization, no clock values need to be exchanged. This is different from time synchronization, where the clock values of reference points in time are exchanged, too.

A node reference tick is the point in time where said node estimates a global reference point in time, based on its local information.

Said received synchronization tick frame may be collision-protected.

According to another example there is provided a method for tick-synchronizing a node of a wireless multi-hop network with at least one other node of said multi-hop network during a synchronization phase comprises of at least one round, said network comprising a plurality of nodes being arbitrarily connected, said method comprising of the steps:

receiving a synchronization tick frame from a node,
determining a node reference tick $t_{syncNode}$ using knowledge on the received and expected number of tick frame transmissions, and the start time $t_{rxTick}$ of receipt of said synchronization tick frame in said node.

Said received synchronization tick frame may be collision-protected.

Said node reference tick $t_{syncNode}$ may be used for tick-synchronizing said node with other nodes of the network; in particular, $t_{syncNode}$ may be a reference point in time used for synchronization.

Said network may form dynamically, and consist e.g. of a set of small, low power nodes communicating via radio links. For example, nodes within transmission range of each other may be connected via such radio links and communicate with each other.

A reference tick may be a point in time or global reference point in time to which all nodes in said network are synchronized. For network-wide medium slotting, e.g., it is not necessary that the clocks of the nodes in the network are synchronized. More in detail, the nodes in particular synchronize to ticks without exchanging clock values of these ticks. The boundaries of transmission slots for transmission of data are then defined relative to these determined ticks.

A round is in particular determined by the transmission of a synchronization tick frame from one node to at least one other node. In other words, a round may correspond to the transmission time of all bits of a synchronization tick frame, in particular from one node to another node within transmission range, and may have a fixed length. The current round of a synchronization phase may be the round which is presently executed in the node.

Said received synchronization tick frame may contain said round number $n_{round}$ and said round number $n_{round}$ represents the number of hops $n_{hops}$ said synchronization tick frame has performed between nodes of said network since its generation.

One hop may be defined as the transmission of a packet or frame from one node to another in the network.

According to one example, there is provided a method for tick-synchronizing a node of a wireless multi-hop network with at least one other node of said multi-hop network, said network comprising a plurality of nodes being arbitrarily connected, said method comprising the steps of:

receiving a synchronization tick frame from a node, said synchronization tick frame containing a round number $n_{round}$, said round number $n_{round}$ representing or

corresponding to the number of hops $n_{hops}$ said synchronization tick frame has performed since its generation;

determining a node reference tick $t_{syncNode}$ corresponding to a master reference tick $t_{syncMaster}$ using said predetermined round number $n_{round}$ and the start time $t_{rxTick}$ of receipt of said synchronization tick frame in said node.

A <u>master reference tick</u> is the node reference tick of a master node.

Said received synchronization tick frame may be collision-protected.

Alternatively or additionally, said round number ground may be determined by said node receiving said synchronization tick frame. Said round number $n_{round}$ may thus be determined internally by the node. In some cases, $n_{round}$ is not transmitted with synchronization tick frame. Said round number $n_{round}$ may be determined by the elapse of a timer in said node receiving said synchronization tick frame. Said timer may represent the duration of one round.

Said node reference tick $t_{syncNode}$ may correspond to a master reference tick $t_{syncMaster}$. The determined node reference tick $t_{syncNode}$ may in particular be a good estimate for said master reference tick $t_{syncMaster}$ and can be used for tick-synchronizing said node.

Moreover, said synchronization tick frame may be generated by a master node and said master reference tick $t_{syncMaster}$ is the time at which said master node sent said synchronization tick frame.

Said network may have a maximal diameter of $n_{hopsmax}$ hops, said method may further comprise the steps of:

determining whether the number of elapsed or performed rounds of the present synchronization phase is inferior to $n_{nopsMax}$;

if the number of elapsed rounds is inferior to $n_{hopsMax}$

incrementing said round number $n_{round}$ by 1; and

sending a synchronization tick frame.

Said synchronization tick frame may be collision-protected.

Said synchronization tick frame may be sent at scheduled points in time. Moreover, in one example, said synchronization tick frame may be sent without prior clear channel assessment. Furthermore, said synchronization tick frame may be sent to all nodes within transmission range.

Said synchronization tick frame may comprise a master tick frame used for master-based tick synchronization.

Said synchronization tick frame may comprise a decentralized tick frame used for decentralized tick synchronization.

Preferably said synchronization tick frame comprises at least one bit and said at least one bit is encoded with a black burst during transmission. A black burst is a period of transmission energy on the medium. It may, for instance, be implemented by a PHY frame with irrelevant contents.

Said synchronization tick frame may be sent at a scheduled point in time. Moreover, said synchronization tick frame may be sent without prior clear channel assessment.

Further preferably, said step of receiving comprises performing a clear channel assessment, which detects whether the transmission medium is busy. Said step of receiving may comprise detecting the energy level on the transmission medium, or of detecting a signal with specific modulation and/or spreading characteristics on the transmission medium.

The value of said at least one bit of said synchronization tick frame may be determined only on the basis of the detected energy level on the transmission medium. In particular, no decoding of frame preambles, headers or contents is necessary.

Said network may have a maximal diameter of $n_{hopsmax}$ hops and said synchronization tick frame may comprise at least as many bits to binarily code $n_{nopsMax}$.

Moreover, the method may further comprise the step of determining whether said node has already received a synchronization tick frame in said synchronization phase.

Preferably, said network is a wireless ad-hoc network. Ad hoc networks may form dynamically, and consist e.g. of a set of small, low power nodes communicating via radio links. Moreover, ad-hoc networks are in particular not dependent of a given or predefined infrastructure.

Furthermore, a method for time-synchronizing a node of a wireless multi-hop network with at least one other node of said multi-hop network may comprise the steps of the method for tick synchronizing a node as described above, wherein said method further comprises the step of receiving a clock value referring to a reference point in time.

Said method may further comprise the step of sending said clock value referring to a reference point in time.

Moreover, a method for tick-synchronizing a node of a wireless multi-hop network with at least one other node of said multi-hop network, wherein said network comprises a plurality of nodes being arbitrarily connected, may comprise the steps of:

generating a synchronization tick frame, said synchronization tick frame containing a round number, said round number $n_{round}$ representing the number of hops said synchronization tick frame has performed since its generation;
sending said synchronization tick frame preferably to at least one node within transmission range.

According to another example there may be provided a method for tick-synchronizing a node of a wireless multi-hop network with at least one other node of said multi-hop network, wherein said network comprises a plurality of nodes being arbitrarily connected, said method may comprise the steps of: generating a synchronization tick frame, said synchronization tick frame not containing a round number; sending said synchronization tick frame preferably to at least one node within transmission range.

Said synchronization tick frame may be collision-protected.

Said synchronization tick frame may be sent to all nodes within transmission range.

Moreover, said steps may be performed periodically, in particular by setting a timer.

Moreover a method for time-synchronizing a node of a wireless multi-hop network with at least one other node of said multi-hop network may comprise the steps of the method for tick synchronizing a node as described above, wherein said method further comprises the step of sending said clock value referring to a reference point in time.

A computer-program product may comprise computer readable instructions, which when loaded and run in a computer system and/or computer network system, cause the computer system and/or the computer network system to perform a method as described.

A system may comprise:

a first node and a second node,
said first node being connected with said second node, said first node having circuitry for generating a synchronization tick frame;
said second node having circuitry for receiving a synchronization tick frame from a node, circuitry for determining a node reference tick using a round number $n_{round}$ and the start time $t_{rxTick}$ of receipt of said synchronization tick frame in said node, and having circuitry for using said determined node reference tick for tick-synchronizing said node; wherein said round number $n_{round}$ is indicative of the current round of said synchronization phase.

Said nodes may comprise a transceiver for receiving and sending information packets or frames and a processor for processing information.

Further objects, advantages and features of the present invention will become apparent from the following description of embodiments of the invention with reference to the figures.

Fig. 1        shows an exemplary network according to an embodiment of the present invention;

Figs. 2A-2D    show a schematic overview of a tick, synchronization method according to an embodiment of the present invention applied to the network shown in Fig. 1;

Fig. 3        shows a flow diagram of a tick synchronization method according to an embodiment of the present invention;

Fig. 4        shows a flow diagram of a tick synchronization method according to an embodiment of the present invention;

Fig. 5        shows schematic view of the structure and timing of synchronization phases and information transmission phases according to an embodiment of the present invention;

Fig. 6            shows a schematic view of an exemplary synchronization tick frame according to an embodiment of the present invention;

Fig. 7            shows a schematic view of delays of a message transfer, and

Fig. 8            shows a schematic view of an exemplary synchronization tick frame according to another embodiment of the present invention.

In the following, embodiments of the present invention will be described with reference to the figures.

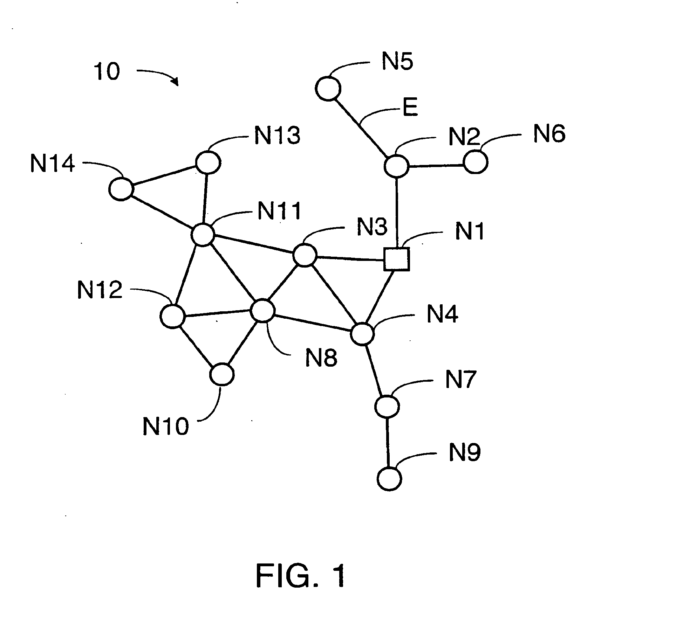

Fig. 1 shows an exemplary network according to an embodiment of the present invention.

Network 10 comprises nodes N1 to N14 which are connected by edges E. In the network 10 shown in Fig. 1, nodes which are within transmission range of each other are connected by lines. The network is a multi-hop network, which means that a packet which is to be transmitted via said network 10 is transmitted via a plurality of intermediate nodes on its way from the starting or sending node to the receiving or destination node. The network shown in Fig. 1 has a maximum hop count of five. This is the maximal number of hops a packet needs to perform on the shortest path during transmission from an arbitrary sending node to an arbitrary receiving node in the network shown in Fig. 1. In the present case, this would e.g. be the transmission of a packet from node N14 to node N6. For each network, a maximum network diameter $n_{hopsMax}$ is defined. This is the maximal number of hops on the shortest path between any pair of nodes; the maximal number of hops shall not be exceeded during operation. For the example shown in Fig.1, the maximum network diameter $n_{hopsMax}$ is defined as 6 hops.

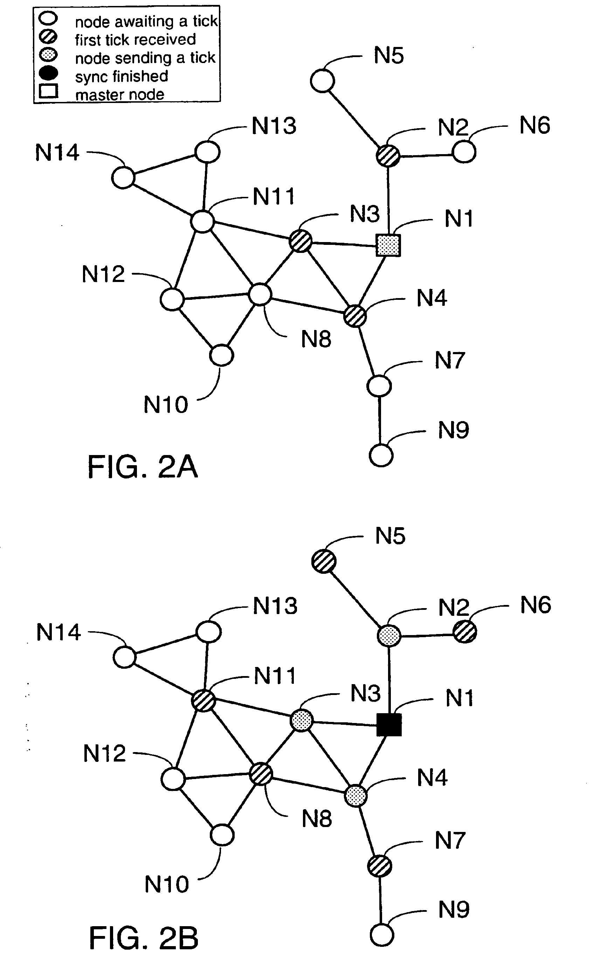

A description of how the network 10 can be tick-synchronized using the method according to an embodiment of the present invention will be described with reference to Figs. 2A to 2D. Figs. 2A to 2D show the network of Fig. 1 at different stages of one synchronization phase of the network. It is to be noted that a synchronization phase is performed periodically in the network.

Tick synchronization is concerned with establishing reference points in time only - also called reference ticks - among the nodes of a network. Different from time synchronization, no clock values are exchanged. Tick synchronization is sufficient, e.g. for network-wide medium slotting, where only common reference points in time are required. For time synchronization, two pieces of information are needed: a reference point in time and a clock value, which are both updated periodically. Based on tick synchronization, time synchronization can be achieved by one exchange of a clock value among the nodes of a network, referring to a reference tick. Thus, the present invention may also be applicable in cases where time synchronization is required.

At given points in time, a master node starts a synchronization phase. In the example shown in Figs. 2A to 2D, it is assumed that node N1 performs the role of a master node. This node is, therefore, marked as a square. The other nodes are marked with circles. However, it is to be noted that it is in fact irrelevant which of the nodes of the network takes the role of a master node. Which node shall act as master node can be determined with the use of known master node finding algorithms, which will be not described in detail herein.

Moreover, in Figs. 2A to 2D, a node colored black is a node for which the tick synchronization in the current synchronization phase is finished. A node colored white is a node which is still awaiting a synchronization tick frame, i.e. a node which has node yet received any synchronization information in the current synchronization phase. A node marked hatched is a node which has received a synchronization tick frame in the current round. Only nodes which received for the first time a synchronization tick frame in the current round are marked hatched. Nodes which have already in a previous round received a synchronization tick frame are already synchronized and, therefore, marked black. Nodes marked dotted are nodes sending a synchronization tick frame in the current round. A legend indicating the marking of the nodes is given on the top left of Fig. 2A.

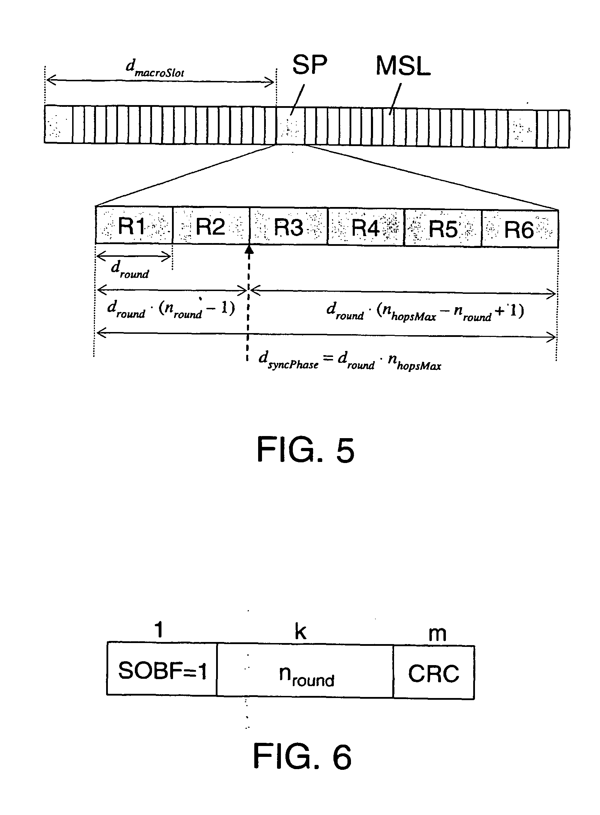

Node N1 acting as master node broadcasts a synchronization tick frame carrying a round number (Fig. 2A). In the described embodiment, the round number $n_{round}$ is one for the tick frame generated by master node N1. Master node N1 sends the tick frame to all nodes within transmission range. In the shown network, these are nodes N2, N3 and N4. The synchronization tick frame comprises a plurality of bits and details thereof will be described later with reference to Fig. 6.

Nodes N2, N3 and N4, upon receiving the tick frame sent by node N1, derive the round number $n_{round}$ contained in the tick frame and detect the local node time $t_{rxTick}$ at which the tick frame was received. In particular, the local time at which the first bit of the tick frame was received is recorded. Since the round number $n_{round}$ is one in the present round, the receiving nodes conclude that this tick frame has been sent by the master node. From the tick frame reception time $t_{rxTick}$ in the respective node and the round number, the receiving node can estimate the time at which the tick frame was sent by the master node. Details of this calculation will be given later.

Nodes N2, N3 and N4 verify if there are more nodes to be tick-synchronized and, in the positive, increment the round number by one, thus $n_{round} = 2$, and forward the tick frame now carrying the incremented round number to all nodes in transmission range (Fig. 2B). For node N2, the tick frame will be transmitted to nodes N1, N5 and N6. In nodes N5 and N6, a similar processing takes place as done in the previous round e.g. in node N2. This means that the round number is extracted from the received tick frame and together with the tick frame reception time in this node. With this information, the time, when the original tick frame was sent by master node N1 can be determined.

In node N1, a different processing takes place. As node N1 is already synchronized, the received tick frame is discarded.

Similarly, node N3 sends a tick frame containing an incremented round number to nodes N1, N4, N8 and N11, and node N4 sends a respective tick frame to nodes N1, N3, N7 and N8. As nodes N1, N3 and N4 are already synchronized, these nodes discard the received tick frames. Nodes N7 and N8 have not yet been synchronized and therefore process the received tick frame.

In this respect it is to be mentioned that due to the structure of the network, N8 receives a tick frame containing the same information from two nodes, i.e. N3 and N4. Thus, two tick frames collide. However, according to an embodiment of the present invention, the tick frames are protected against such a collision and therefore are not corrupted when sent simultaneously or almost simultaneously. Details of the collision protection will be discussed later.

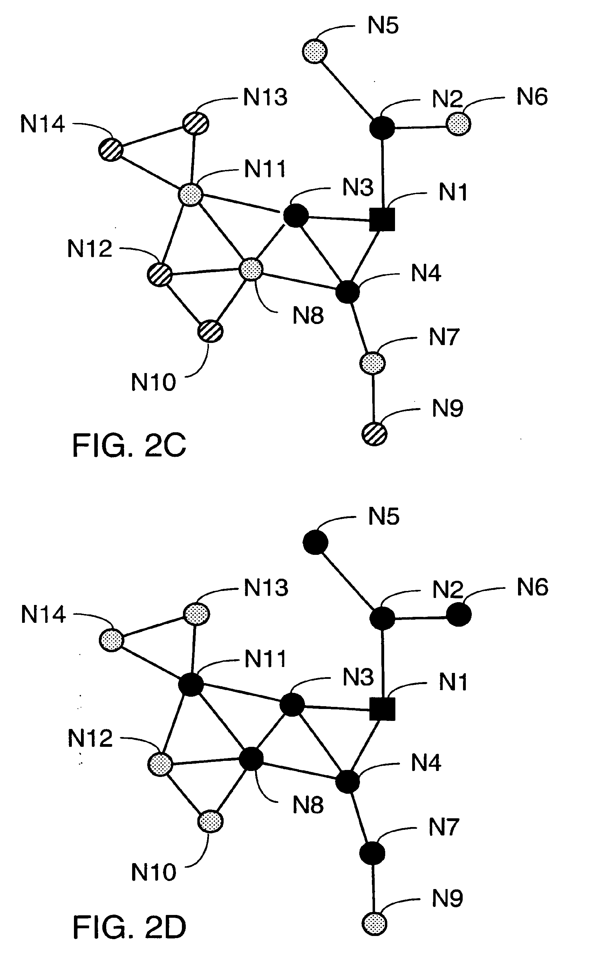

Nodes N7, N8 and N11 now perform the processing of deriving the synchronization information from the received tick frame and again increment the round number, thus $n_{round} = 3$. Afterwards these nodes send a respective tick frame to all nodes within transmission range (Fig. 2C). By such proceeding, nodes N9, N10, N12, N13 and N14 are synchronized.

Thereafter, nodes N9, N10, N12, N13 and N14 send the tick frame with incremented round number, $n_{round} = 4$ (Fig. 2D). However, as there are no more nodes which have not yet been synchronized, all tick frames sent by these nodes are discarded by the receiving nodes.

As can be seen from the above description, a round is the part of the synchronization phase when a synchronization tick frame is sent from one node to another.

To sum up, based on round number $n_{round}$ and duration of rounds $d_{round}$, the start time of the synchronization phase, i.e. the time when the master node sent the first bit of the synchronization tick frame, as a reference tick or master reference tick for all nodes of the network can be estimated. It is to be noted that the synchronization phase always terminates after $n_{hopsMax}$ rounds. If the network diameter is smaller than $n_{hopsMax}$ or if the master node is not located at the network border, no tick frames are sent in the final round(s) anymore. In the scenario in Figs. 2A to 2D, tick frames are sent in rounds 1 through 4, but not in rounds 5 and 6.

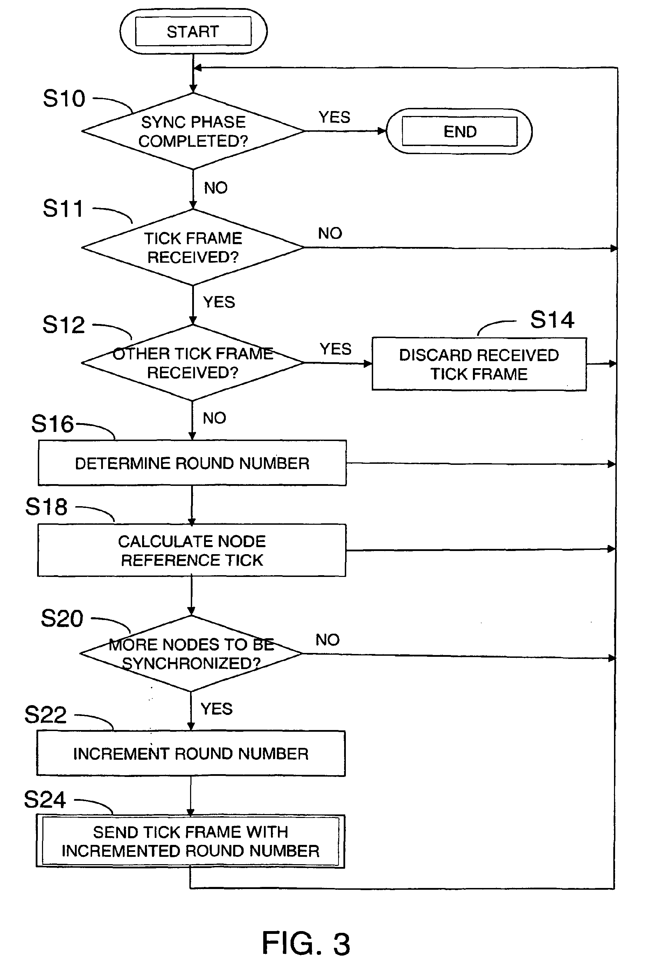

The details of the processing in a node not acting as a master node during the synchronization procedure will be given with reference to Fig. 3. Fig. 3 shows a flow chart of the processing in one node of the network not acting as master node during the synchronization phase.

The node is put into synchronization mode by e.g. setting a timer and the processing starts. In step S10, a query is performed, whether the synchronization phase is completed. The end of the synchronization phase can e.g. be determined by setting a timer which expires after a predetermined time $t_{endsyncPhase}$. If the synchronization phase is completed (YES in step S10), the synchronization process ends, and the operation mode of the node changes to normal transmission mode for the transmission of data.

If the synchronization phase is not completed (NO in step S10), the node queries whether a tick frame was received (step S11). If no tick frame was received (NO in step S11), the query is performed again.

If a tick frame was received (YES in step S11), a query is performed whether the respective node already received another tick frame during this synchronization phase (step S12). If the node already received another tick frame during this synchronization phase (YES in step S12), the respective node already received the necessary synchronization information and the newly received tick frame is discarded (step S14). The processing then returns to step S10.

If, however, the node has not yet received a tick frame (NO in step S12), the round number contained in the received tick frame is determined (step S16). Afterwards, the node reference tick is calculated in step S18 by using the determined round number and the time when the tick frame was received in the respective node.

Afterwards, a determination is performed whether there are still more nodes to be synchronized in the network (step S20). This is in particular done by comparing the current round number, which is an indication of the number of hops the tick frame has performed since is was sent from the master node, with the maximum network diameter of the network. In particular, it is determined whether the round number $n_{round} < n_{hopsMax}$.

If there are no more nodes to be tick-synchronized (NO in step S20), processing returns to step S10. If, however, there are more nodes to be tick-synchronized (YES in step S20), the round number is incremented (step S22) and the node now itself sends the tick frame with the incremented round number to all nodes within transmission range (step S24), thus starting a new round. Afterwards, processing returns to step S10.

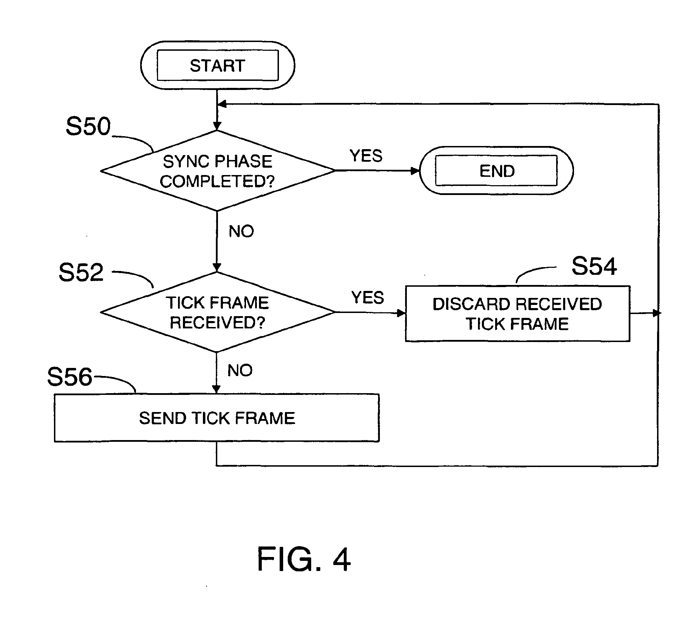

The details of the processing in a node acting as a master node during the synchronization procedure will be given with reference to Fig. 4. Fig. 4 shows a flow chart of the processing in one node of the network acting as master node during the synchronization phase.

The node is put into synchronization mode by e.g. setting a timer and the processing starts. In step S50, a query is performed, whether the synchronization phase is completed. The end of the synchronization phase can e.g. be determined by setting a timer which expires after a predetermined time $t_{endSyncPhase}$. If the synchronization phase is completed (YES in step S50), the synchronization process ends, and the operation mode of the node changes to normal transmission mode for the transmission of data.

If the synchronization phase is not completed (NO in step S50), the node queries whether a tick frame was received (step S52). This can occur during the synchronization process as described above. If a tick frame was received (YES in step S52), the received tick frame is discarded (step S54), as the respective node is the master node and is already synchronized. The processing then returns to step S50.

If, however, the no tick frame is received (NO in step S52), the master node sends a synchronization tick frame to all nodes within transmission range (step S56). The time $t_{syncMaster}$ at which the tick frame is sent represents the tick to which all nodes in the network will be synchronized. This tick frame preferably carries round number zero. Afterwards, the processing returns to step S50.

As can be seen from the description given above with respect to Figs. 3 and 4, for the synchronization of the network only the round number is transmitted with the synchronization tick frame. In particular, no specific time information is transmitted to the nodes. From the information received in the synchronization tick frame, i.e. the round number and the time of receipt in the node, the node can determine a good estimate of a reference point in time. Said reference point in time corresponds to $t_{syncMaster}$.

Below is listed an example of an algorithm using methods according to an embodiment of the present invention.

### Data structure of master and non-master nodes

| (1) | **const** | $n_{hopsMax}$: integer; | /* maximum network diameter |
|---|---|---|---|
| (2) | | $d_{macroSlot}$: duration; | /* duration of a macro slot |
| (3) | | $d_{round}$: duration; | /* duration of a round |
| (4) | **var** | $n_{round}$: integer; | /* round of first tick reception |
| (5) | | $t_{txTick}$: time; | /* last tick transmission time |
| (6) | | $t_{rxTick}$: time; | /* last tick reception time |
| (7) | | $t_{endSyncPhase}$: time; | /* end of the current sync phase |
| (8) | **clock** | $t_{local}$; | /* local time |
| (9) | **timer** | $timer_{txTick}$; | /* next tick frame transmission |
| (10) | | $timer_{macroSlot}$; | /* begin of the next macro slot |

### Master node synchronization algorithm

```
(11) initialize  n_hopsMax, d_macroSlot, d_round;        /* static network parameters

(12)             timer_macroSlot;                        /* used by master nodes

(13) when timer_macroSlot then {

(14)       t_txTick := t_local;

(15)       broadcast tickFrame(1);                       /* start round number 1

(16)       t_endSyncPhase := t_txTick + d_round * n_hopsMax;

(17)       set timer_macroSlot := t_txTick + d_macroSlot;

(18) }

(19) when receive tickFrame (n) then {                   /* network interrupt

(20) }                                                   /* discard incoming tick frames
```

**Non-master node synchronization algorithm**

```
(21) initialize  n_hopsMax, d_macroSlot, d_round;        /* static network parameters

(22)             timer_macroSlot;                        /* used during synchronization

(23) when timer_macroSlot then

(24)       n_round := n_hopsMax + 1;                     /* enable tick frame processing

(25) when receive tickFrame (n) then {

(26)       if n < n_round then {                         /* accept first tick frame

(27)          t_rxTick := t_local;                       /* record tick frame reception time

(28)          n_round := n;                              /* disable tick frame processing

(29)          set timer_macroSlot := t_rxTick − d_round * (n_round − 1) + d_macroSlot;

(30)          t_endSyncPhase := t_rxTick + d_round · (n_hopsMax − n_round + 1);

(31)          if n_round < n_hopsMax then               /* more rounds?

(32)             set timer_txTick := t_rxTick + d_round;

(33)       }

(34) }

(35) when timer_txTick then

(36)       broadcast tickFrame (n_round + 1);
```

In lines (1)-(10), the data structure of master and non-master nodes is shown. Constants and variables denoting numbers, durations, and times have names n, d, and t followed by a subscript, respectively. The subsequent comment provides additional explanations. Furthermore, there is introduced a local clock, and two timers that can be set to trigger interrupts.

Lines (11)-(20) list the part of the algorithm that is executed by the master node. In lines (11)-(12), the required initializations are shown. While the parameters in line (11) are constants and determined offline during network configuration, timer$_{macroSlot}$ is set dynamically when the node becomes master node. The when-clauses shown in lines (13) and (19) are used to define interrupt routines, i.e. routines that are executed when the specified interrupt event occurs. In line (13), this is a timer event; the interrupt in line (19) is triggered by the network adapter due to a tick frame reception. At the beginning of every macro slot (timer event in line (13)), the master has to initiate a synchronization phase by broadcasting a tick frame with round number 1 (line (15)). The end of the sync phase is determined in line (16), and the timer for the beginning of the next macro slot set is in line (17).

Lines (21)-(36) list the part of the algorithm that is executed by non-master nodes. The required initializations are as in the master node algorithm. Tick frame processing is enabled at the beginning of each macro slot (lines (23)-(24)). When a tick frame is received (interrupt in line 25), the round number is evaluated. If this is the first tick frame of the current sync phase, the frame is processed (lines (27)-(32)), otherwise, it is discarded. By recording the round number, processing of subsequent tick frames (which will have higher numbers) is disabled (line (28)). Next, the timer identifying the start of the next macro slot is set (line (29)). An example of how the timer value is calculated can be seen in Fig. 5, with $n_{round}$ = 3. The end of the sync phase is determined in line (30). Finally, it is checked whether there is a further round (line (31)). If this is the case, the timer timer$_{txTick}$ is set to the beginning of the next round. When this timer expires (line 35), a tick frame is sent (line (36)).

Fig. 5 shows a schematic view of the structure and timing of synchronization phases and information transmission phases according to an embodiment of the present invention.

Based on network-wide tick synchronization, the transmission medium is divided into global macro slots of fixed length $d_{macroSlot}$. Each macro slot is subdivided into a leading synchronization phase SP of fixed length, and a sequence of micro slots MSL that can be used for the transmission of regular data frames. The length of macro slots is bounded by the required tick precision $d_{offsetMax}$ and the maximal clock skew $r_{clockSkewMax}$.

Fig. 5 also shows the structure and timing of the synchronization phase. A synchronization phase is subdivided into rounds, in the present case six rounds R1 to R6, of fixed duration $d_{round}$, where the number of rounds is $n_{hopsMax}$. In an embodiment, rounds are incrementally numbered, starting with 1. The length of the synchronization phase $d_{syncPhase}$ is $d_{round} * n_{hopsMax}$.

The format of synchronization tick frames will be described in detail with reference to Fig. 6. Fig. 6 shows a schematic view of an exemplary synchronization tick frame according to an embodiment of the present invention.

As shown in Fig. 6, preferably, tick frames start with a dominant bit, i.e. SOBF = 1. Then, the number of the current round $n_{round}$ is encoded. $n_{round}$ is protected by a CRC (cyclic redundancy check) checksum. In addition, every receiver expects a particular tick frame in a relatively small time window, which provides for further redundancy to detect bit errors.

The numbers above the box in Fig. 6 indicate the number of bits used for each field in the synchronization tick frame.

For SOBF, one bit is reserved. The number k of bits needed to encode the current round depends on the upper bound for the maximal network diameter $n_{hopsMax}$ and is calculated as follows:

$$k = \lceil \log_2 n_{hopsMax} \rceil$$

For the CRC checksum, m bits are reserved. Therefore, in the discussed embodiment, a synchronization tick frame has a total length of

$$length_{tickFrame} = k + m + 1.$$

It is desirable that tick frames be as short as possible, because bit times are significantly longer than usual. To send one bit, the duration of a black burst is needed, which may be implemented by a physical frame or a frame which is transmitted over the physical layer, in particular, consisting of preamble, start-of-frame, and MAC frame (media access control frame), even if the contents is not needed. To keep the overhead as small as possible, the smallest MAC frame may be used, consisting of the length field with value zero, i.e. one single byte. However, it is to be noted that the structure of the physical frame may be different depending on the type of the base transmission technology used.

As stated earlier, according to an embodiment of the present invention, a tick frame is a specialized synchronization frame that is protected against collisions and carries synchronization data. To ensure collision protection, tick frames, and in particular the single bits of a tick frame, are preferably encoded using black bursts.

Black burst frames are transmitted without prior clear channel assessment (CCA), i.e. without carrier sensing. Different from regular data frames, their contents is irrelevant, which protects them against collisions. However, the length of a black burst can be determined and used for encoding purposes. To detect black bursts, the transceiver in a node is configured to perform clear channel assessment preferably based only on the energy level on the medium, without having to decode frame preambles. Alternatively, other methods of clear channel assessment may be envisaged. This way, it is possible to receive black bursts correctly even if multiple transmissions collide, destroying preamble, header, and payload.

While black bursts are insensitive to interference, they are affected by length changes, which may occur when black burst transmissions overlap. However, this problem may be avoided if black bursts are sent at predefined points in time, assuming that all nodes are tick synchronized with a maximal offset $d_{offsetMax}$.

According to an embodiment, black bursts of equal length are used to encode tick frames including synchronization data. Here, "1" is encoded as a black burst transmission, "0" is encoded as no black burst transmission.

The nodes receiving a tick frame in round i become the nodes sending a tick frame in round i+1, which is synchronized with respect to the local time of the previous tick frame reception: $t_{txTick} = t_{rxTick} + d_{round}$. In particular, the tick can be forwarded after the respective node has received the entire tick frame and after the tick frame has been processed during the time $d_{tickProcessing}$ in the node. Here, $d_{round}$ denotes the round duration, a constant configuration parameter that should be greater than tick frame creation delay and send delay together.

One node can calculate a node reference tick $t_{syncNode}$, which is an estimate of the master reference tick $t_{syncMaster}$ which indicates the time when the master node sent the synchronization tick frame using the following formula:

$$t_{syncNode} = t_{rxTick} - (n_{round} - 1) * d_{round}$$

with

$$d_{round} = d_{transmissionTickFrame} + d_{tickProcessing}$$

wherein

$$d_{transmissionTickFrame} = d_{blackBurst} * (k+m+1)$$

$d_{blackBurst}$ is the time needed for transmitting one black burst and the time necessary for a subsequent pause.

According to another embodiment, the round number $n_{round}$ used for calculating the node reference tick $t_{syncNode}$ may be determined by the node receiving the synchronization tick frame. This may be done e.g. by incrementing a counter in the node which represents the value $n_{round}$ each time the duration of a round has elapsed. Thus, the round number does not need to be transmitted in the synchronization tick frame.

Furthermore, a combination of the two above described alternatives for determining $n_{round}$ may be used. In this case, the value for $n_{round}$ received with the synchronization tick frame may be compared with the value determined by the node itself. In case these two values do not match, a predetermined processing, which will not be described in detail may be executed.

The above described methods for synchronizing a network may be referred to as master-based synchronization, as the synchronization tick frame is generated by a master node.

According to another embodiment, a decentralized tick synchronization method may be used which will be described below.

At real time to marking a reference tick, all nodes start transmission of a tick frame. Since nodes are not perfectly synchronized, all tick frame transmissions will in fact not start at exactly $t_0$, but within an interval that is bounded by a maximum tick offset. The encoding ensures that if the transmission of identical tick frames starts in this interval, collisions are non-destructive. Synchronization over multiple hops is achieved by repeated transmission of tick frames. Before transmitting a tick frame at the prescheduled point in time, a node listens on the medium for a predefined time interval. If during this interval, it detects the start of a tick frame, it knows that the tick offset with respect to the sender(s) currently exceeds a given threshold. Therefore, the node synchronizes to that tick frame and immediately starts transmission of its own tick frame, thereby forwarding this approximated reference tick to all nodes in range. If, however, no tick frame is detected during the predefined interval, the node starts transmission of its own tick frame as scheduled. Each node in range will either detect this or another tick frame and readjust its tick synchronization, or start transmission of its own tick frame as scheduled.

Each transmission of a tick frame is called synchronization round. When a node A receives a tick frame, it knows that the tick offset w. r. t. the sender currently exceeds a given threshold. Ideally, reception of that tick frame should start at real time $t_1$. The ideal delay $d_{01} = t_1 - t_0$ can be computed as the product of the (known) synchronization round number $n_{round} - 1$ and the (fixed) round duration $d_{round}$. For node A, the ideal delay is increased by a variable signal propagation delay and a variable delay of recognizing the start of tick frame reception. Therefore, the start of tick frame reception at node A is not recognized at real time $t_1$, but at $t_1'$.

Moreover, each node determines the round number $n_{round}$ round internally as described above, e.g. by incrementing a counter in the node which represents the value $n_{round}$ each time the duration of a round has elapsed. Since node A knows round number $n_{round}$ and round duration $d_{round}$, it can calculate the ideal delay $d_{01}$. Subtracting $d_{01}$ from $t_1'$ yields $t_0'$, which is the reference tick as perceived by node A. This leaves a local tick offset of $t_0' - t_0$. For this offset, an upper bound can be deduced, depending linearly on maximum network diameter in hops, clear channel assessment delay jitter, and transceiver switching time. Note that to refer to $t_0'$, node A needs its local clock values only: $c_A(t_0') = c_A(t_1') - d_{01}$. Thus, without the need for the exchange of clock values, each node has a local reference point in time of deterministic accuracy, which is sufficient for multi-hop medium slotting.

According to a further embodiment, master based tick synchronization and decentralized tick synchronization may be combined.

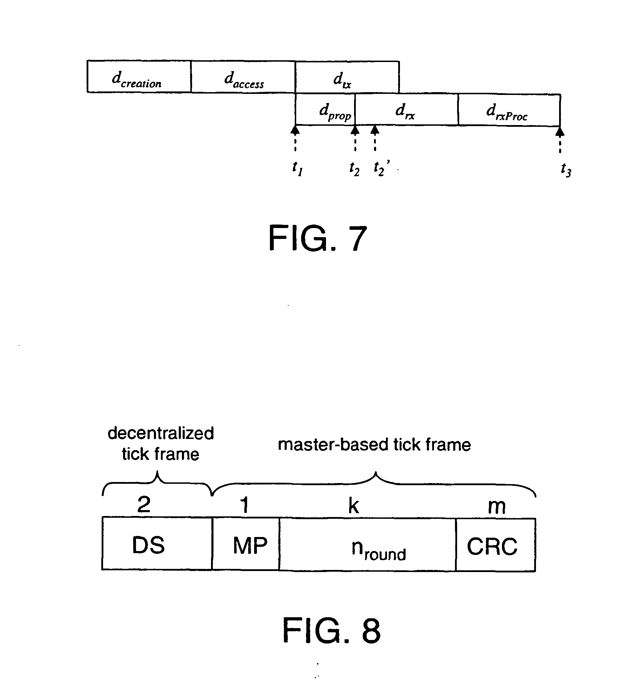

In this case, as shown in Fig. 8, synchronization tick frames now consist of two parts, a decentralized tick frame and a master tick frame, which are both collision-protected. The use of decentralized tick frames is as described above. The transmission of master tick frames is always initiated by the master node which may be arbitrarily selected. Nodes receiving a master tick frame forward this tick frame in the next round. Thus, all nodes synchronize to the reference tick as set by the master node. If there is a master node failure, this is recognized by all other nodes in the next synchronization phase. In the same phase, all nodes switch back to decentralized tick synchronization.

Decentralized tick synchronization is active when the network is stabilized. In each synchronization round, each network node sends a decentralized tick frame. This ensures that after the end of the synchronization phase, all nodes are synchronized with a maximum tick offset that depends linearly on maximum network diameter in hops, clear channel assessment delay jitter, and transceiver switching time.

Master-based tick synchronization is active when the network is stabilized, and a master node has been determined. In the first synchronization round of each synchronization phase, the master node sends a master tick frame. All nodes receiving a master tick frame in round i become the nodes sending a master tick frame in round i+1. This ensures that after the end of the synchronization phase, all nodes are synchronized with a maximum tick offset that depends linearly on maximum network diameter in hops and clear channel assessment delay jitter only, thus being more accurate than decentralized tick synchronization.

The nodes receiving a master tick frame in round i become the nodes sending identical master tick frames in round i+1, which is synchronized w. r. t. the local time of the previous master tick frame reception: $t_{txTick} = t_{rxTick} + d_{round}$. Again, $d_{round}$ denotes the round duration, a constant configuration parameter that must be greater than tick frame creation delay, medium access delay, and tick frame send delay together. Additionally, all nodes send a decentralized tick frame in every round in order to maintain decentralized tick synchronization as a backup in case there is a master failure.

The algorithm of an exemplary method using the combination of decentralized tick synchronization and master-based tick synchronization is listed in Tables I through IV. In the example described below, the round number $n_{round}$ is determined by the node itself. In Tables I to IV $t_{refTick}$ corresponds to $t_{syncNode}$

In Table I, the data structure and initialization of values is shown. By convention, constants and variables denoting numbers, booleans, durations, and times have names n, b, d, and t, followed by a subscript, respectively. The subsequent comment provides additional explanations. Furthermore, there is introduced a local clock (line 10), and timers (lines 11-15) that can be set to trigger interrupts. The timer $timer_{macroSlot}$ is initialized during network stabilization and triggers the next synchronization phase.

| (1) **const** $n_{hopsMax}$: integer; | /* maximum network diameter |
|---|---|
| (2) | $d_{macroSlot}$: duration; | /* duration of a macro slot |
| (3) | $d_{round}$: duration; | /* duration of a round |
| (4) | $d_{rxDec}$: duration; | /* duration of listening period |
| (5) | $d_{decPhase}$: duration; | /* duration of decentralized phase |
| (6) **var** | $n_{round}$: integer; | /* current synchronization round |
| (7) | $b_{syncMaster}$: boolean; | /* node synchronized to master? |
| (8) | $t_{cur}$: time; | /* last clock reading |
| (9) | $t_{refTick}$: time; | /* local time of last reference tick |
| (10) **clock** | $C_{local}$; | /* local clock time |
| (11) **timer** | $timer_{rxDec}$; | /* end of listening period |
| (12) | $timer_{syncMaster}$; | /* start of next master-based sync |
| (13) | $timer_{round}$; | /* start of next round |
| (14) | $timer_{macroSlot}$; | /* start of next macro slot |
| (15) | $timer_{txMasterTick}$; | /* next master tick frame transmission |
| (16) **initialize** $timer_{macroSlot}$; | /* start of next macro slot |

## TABLE I

Table II lists the algorithm used for decentralized tick synchronization. When-clauses (lines 1, 11, 22, 25) are introduced to define interrupt routines, i.e. routines that are executed when the specified interrupt event occurs. In lines 1, 22, and 25, these are timer events; the interrupt in line 11 tick frame reception. The following actions are taken:

- At the beginning of each macro slot, several variables and timers are initialized (lines 2-9). In particular, the local time of the last reference tick is recorded (line 3), $b_{syncMaster}$ is initialized to false indicating that during this synchronization phase, only decentralized synchronization has been achieved so far, and $n_{round}$ is set to 1.

- If during an initial listening phase of length $d_{rxDec}$, a decentralized tick frame is received, the node readjusts the local time of the last reference tick to synchronize to the sender of that frame (line 15). Additionally, the timers are adjusted (lines 14, 16-18). Finally, the node sends its own decentralized tick frame (line 19). If during the listening phase, no decentralized tick frame is received, the node sends its own tick frame (lines 22-23).

- In each subsequent round, the current round number is incremented (line 28), and certain timers are adjusted (lines 29-31), provided the synchronization phase continues (line 27).

```
(1)    when timer_macroSlot then {              /* start sync phase and initialize

(2)         t_cur := c_local;

(3)         t_refTick := t_cur;

(4)         set timer_rxDec := t_cur + d_rxDec;

(5)         set timer_syncMaster := t_cur + d_decPhase;

(6)         set timer_round := t_cur + d_round;

(7)         set timer_macroSlot := t_cur + d_macroSlot;

(8)         b_syncMaster := false;

(9)         n_round := 1;

(10) }

(11) when receive decentralizedTickFrame then { /* resynchronization

(12)        t_cur := c_local;
```

```
(13)         if (b_syncMaster = false) then {              /* decentralized sync?

(14)             reset timer_rxDec;

(15)             t_refTick := t_cur − (n_round − 1) · d_round − d_rxDec;

(16)             set timer_syncMaster := t_cur + d_decPhase − d_rxDec;

(17)             set timer_round := t_cur + d_round − d_rxDec;

(18)             set timer_macroSlot := t_refTick + d_macroSlot;

(19)             send decentralizedTickFrame;

(20)         }

(21) }

(22) when timer_rxDec then {                    /* listening period ends

(23)         send decentralizedTickFrame;  /* no reception during sending

(24) }

(25) when timer_round then {                    /* start next sync round

(26)         t_cur := c_local;

(27)         if (n_round < n_hopsMax) then {     /* sync phase continues?

(28)             n_round := n_round + 1;

(29)             set timer_rxDec := t_cur + d_rxDec;

(30)             set timer_syncMaster := t_cur + d_decPhase;

(31)             set timer_round := t_cur + d_round;

(32)         }

(33) }
```

TABLE II

Table III shows the master node part of the master-based tick synchronization. At the beginning of the first master sync slot, the master sets $b_{syncMaster}$ to true, indicating that it is in fact synchronized to itself (line 3). This has the additional effect that it stops synchronizing to decentralized tick frames throughout the remainder of the synchronization phase. Then, it starts master-based tick synchronization by transmitting a master tick frame (line 4).

```
(1)    when timer_syncMaster then {          /* master sync slot starts

(2)         if (n_round = 1) then {          /* first master sync?

(3)              b_syncMaster := true;       /* this node is the master node

(4)              send masterTickFrame(1);    /* transmit master frame

(5)         }

(6)    }

(7)    when receive masterTickFrame then { }
```

TABLE III

The non-master node part of master-based tick synchronization is listed in Table IV. The first master tick frame received during the current synchronization phase is accepted (lines 1-2) and processed. First, the node readjusts the local time of the last reference tick to synchronize to the sender of that frame (line 4). Additionally, the timers are adjusted (lines 5-6), and $b_{syncMaster}$ is set to true, indicating that this node is now synchronized to the master node (line 7). Then, the transmission of a master tick frame is scheduled for the next round (line 9), provided the synchronization phase continues (line 8). It is to be noted, that before sending the master tick frame (line 13) due to the elapse of $timer_{txMasterTick}$ (line 12), $timer_{round}$ will have elapsed. Thus $n_{round}$ will have been incremented (line 28 of Table II) before forwarding the master tick frame to all nodes within transmission range.

```
(1)    when receive masterTickFrame then {

(2)         if (b_syncMaster = false) then {        /* accept first master tick frame

(3)              t_cur := C_local;

(4)              t_refTick := t_cur − (n_round − 1) · d_round − d_decPhase;

(5)              set timer_round := t_cur + d_round − d_decPhase;

(6)              set timer_macroSlot := t_refTick + d_macroSlot;

(7)              b_syncMaster := true;              /* discard subsequent master tick frames

(8)              if n_round < n_hopsMax then        /* more rounds?

(9)                   set timer_txMasterTick := t_cur + d_round;
```

```
(10)        }
(11) }
(12) when timer_txMasterTick then
(13)        send masterTickFrame(n_round);
(14) when timer_syncMaster then {}
```

TABLE IV

Fig. 6 shows a schematic view of an exemplary synchronization tick frame according to an embodiment of the present invention.

The format of synchronization tick frames used in the present embodiment will be described in detail with reference to Fig. 8. As shown in Fig. 8, a synchronization tick frame comprises a decentralized tick frame and a master-based tick frame.

The decentralized tick frame comprises a decentralized synchronization header. In the present example, two bits a reserved for the decentralized synchronization header.

The master-based tick frame comprises one bit indicating whether a master is present or not (MP). Then, the number of the current round $n_{round}$ is encoded. $n_{round}$ is protected by a CRC (cyclic redundancy check) checksum.

The numbers above the box in Fig. 8 indicate the number of bits used for each field in the synchronization tick frame.

Again, the number k of bits needed to encode the current round depends on the upper bound for the maximal network diameter $n_{hopsMax}$ and is calculated as follows:

$$k = \lceil \log_2 n_{hopsMax} \rceil$$

For the CRC checksum, m bit are reserved.

According to the above described tick synchronization methods, it is not necessary that the clocks of the nodes in the network are synchronized. More in detail, the nodes in particular synchronize to ticks sent by the master node without exchanging clock values of these ticks. In fact, as described above, only the respective round number, however, no clock value is transmitted with the tick frame. The boundaries of transmission slots for transmission of data are then defined relative to these determined ticks.

In addition, clock values referring to reference ticks may be exchanged, thereby achieving time synchronization. In particular, it may be sufficient to exchange one clock value referring to a reference point in time among the nodes of the network. Such a reference point in time may be the time when the master reference tick was sent by the master node.

Due to a variable signal processing delay and a variable delay of recognizing the start of the tick frame reception in a node, the estimated value $t_{syncNode}$ calculated with the use of the above formulas, contains an error $d_{tickOffset}$ for which an upper bound can be determined. Therefore, the synchronization tick can be estimated in each node with a known accuracy.

For multi-hop medium slotting, tick accuracy with a deterministic time bound is desired. There are several sources of message transfer delay, which may contribute to inaccuracy:

- $d_{creation}$ (creation delay) is the duration of constructing a message and forwarding it to the network interface. Delay jitter may be introduced by the operating system due to context switches and interrupt processing.
- $d_{access}$ (access delay) is the duration until the medium can be accessed. Delay jitter may be introduced due to waiting delay in the local message queue and due to medium arbitration in case of contention.
- $d_{tx}$ (send delay) is the duration of message transmission, which depends on transmission rate and message length.
- $d_{prop}$ (propagation delay) is the duration a signal travels from the source node to the destination node. If these nodes are within range, this delay depends on signal propagation speed and node distance only.
- $d_{rx}$ (receive delay) is the duration of receiving a message, depending on transmission rate and message length.

- $d_{rxProc}$ (receive processing delay) is the duration of processing a received message, for instance, by creating and processing a hardware interrupt.

All delays are composed of a fixed minimal delay and a variable delay jitter (possibly zero). The fixed minimal delay can be determined in advance, e.g. by counting instruction cycles or by dividing frame length by transmission rate. If considered properly, it does not affect tick accuracy. However, delay jitter contributes to inaccuracy and must be kept as small as possible.

A schematic view of delays of a message transfer is shown in Fig. 7. In particular, Fig. 7 shows how the delays of a message transfer add up. It should be pointed out that due to the fact that signal propagation starts at the beginning of message transmission, there is some overlap. If drop $\leq d_{tx}$, there is also overlap of transmission and reception. Since transmission rate equals reception rate, $d_{tx} = d_{rx}$.

The above considerations can be applied to the exchange of tick frames. Tick frame creation can be performed well ahead of the next scheduled transmission, which occurs at a predefined point in time; therefore, $d_{creation}$ has no effect on tick accuracy. As stated above, tick frames preferably comprise of a sequence of black bursts. Since black bursts are transmitted without prior carrier sensing, $d_{access}$ is the (constant) duration of the blind period caused by switching the transceiver to send mode. As tick frame length and transmission rate are known, $d_{tx}$ and $d_{rx}$ can be determined by sender and receiver, respectively ($d_{tx} = d_{rx}$).

A source of delay jitter is $d_{prop}$, which depends on signal propagation speed and node distance. In ad hoc networks, this distance is typically well below 100m. With electromagnetic signals propagating through air at the speed of light, the maximal value of $d_{prop}$ is 0.3μs, which is negligible. Another source of delay jitter is $d_{rxProc}$, caused by creating and processing a hardware interrupt. In summary, tick frame transmission can be started on schedule at $t_1$, tick frame arrival begins at $t_2$, and the tick frame is completely received and processed at $t_3$ (see Fig. 7).

The tick synchronization method described above not only receives the entire tick frame, but also records the start time of frame arrival. The hardware mechanism exploited for this purpose is preferably clear channel assessment (CCA), creating a hardware interrupt as soon as the channel is detected busy. This means that the start time of tick frame arrival is recorded at time $t_2'$ (see Fig. 7). The time needed for this detection, called CCA delay, which mainly consists of delay jitter with upper bound and may be referred to as $j_{CCAmax}$, $j_{CCAmax}$ being the $t_2' - t_2$. Since $d_{prop}$ is negligible and tick frames can be sent on schedule at predefined points in time, $j_{CCAmax}$ is the only remaining source of inaccuracy for tick synchronization with BBS. Since in the worst case, this delay jitter accumulates with each hop, the bound for tick offset right after (re-)synchronization is given as $d_{offsetBase} = n_{hopsMax} * j_{CCAmax}$.

Alternatively to creating a hardware interrupt as soon as the channel is detected busy, it may be provided that it is periodically determined whether the channel is busy or not.

Due to clock skew, the tick accuracy achieved after (re-)synchronization degrades over time. The worst case bound $d_{offsetMax}$ depends on the resynchronization period, which in the present case is equal to the macro slot length $d_{macroSlot}$. The clock skew (also referred to as clock drift) denotes the difference between the frequencies of a clock $c_A$ relative to another clock $c_B$. If $c_B$ is a perfect clock at real time t, the frequency of this clock is 1. Assuming a maximal clock skew of $r_{clockSkewMax}$, $d_{offsetMax}$ computes as follows:

$$d_{offsetMax} = n_{hopsMax} * j_{CCAmax} + 2 * r_{clockSkewMax} * d_{macroSlot}$$

In turn, given a worst case bound $d_{offsetMax}$, the maximal macro slot duration can be calculated. On average, tick accuracy will be far better than this bound, however, this can not be exploited for multi-hop medium slotting.

Convergence delay is equal to the duration of a synchronization phase, consisting of $n_{hopsMax}$ rounds. As discussed above, round duration depends on send delay of a black burst, tick frame duration, and tick frame processing delay:

$$d_{syncPhase} = d_{round} * n_{hopsMax}.$$

$d_{round} = d_{blackBurst} * (k + m + 1) + d_{tickProcessing}$, when only master-based tick synchronization is used as described above with reference to Figs. 1 to 6.

$d_{round} = d_{masBurst} * (k + m + 1) + d_{decBurst} * 2 + d_{tickProcessing}$, when both decentralized and master-based tick synchronization is used. In this case $d_{decBurst}$ is the send delay of a decentralized tick frame and $d_{masBurst}$ is the send delay of a master tick frame.

The described method has low complexity in terms of communication, computation, and storage. Communication complexity depends linearly on maximum network diameter - to establish a reference tick, $n_{hopsMax}$ tick frames are exchanged.

In the examples described above, synchronization rounds are denominated starting with "1 ". Alternatively, the rounds can be denominated starting with "0". In this case, the above formulas algorithms (see Tables II to IV) would need to be adapted accordingly.

Above, periodical resynchronization triggered by a master node as well as decentralized synchronization in a stabilized network was described. In the following, examples will be described in brief how stabilization may be reached when the network is powered up, and how it is maintained despite topology changes.

New nodes:

When a node is switched on, it may listen to the transmission medium for the duration of at least $n > m$ macro slots, where n and m are configuration parameters. If m subsequent properly synchronized tick frames are received, the node has detected a stabilized network. In this case, it may be assumed to be tick-synchronized and may start sending synchronized tick frames, thereby joining the network. If no tick frames are detected, the node may become a master node and may start sending tick frames, thereby forming a new network.

Master node failure:

If a master node is switched off or moves outside range of all other network nodes, none of these nodes will receive a master tick frame. However, decentralized tick synchronization is still available and immediately applied by all remaining nodes until a new master has been determined. For that purpose, each node may determine a random number $n_{random}$ out of a sufficiently large integer interval and send a master tick frame $d_{syncPhase} * n_{random}$ after the beginning of the last macro slot. The first node sending the master tick frame may become the master node. If no other node has determined the same random number, master-based tick synchronization is reestablished after one synchronization phase, otherwise the procedure may be repeated. Network stability during the master-less period is maintained by decentralized tick synchronization.

Position changes:

If a node changes position, thereby changing the topology of the network, two situations may arise. First, the set of nodes forming the network remains the same, only the set of links is modified. This has no effect on tick synchronization, since in the above described methods no particular hierarchy is assumed, and because tick frames are protected against collisions. Second, the network is partitioned. In this case, the network partition containing the master node continues using master-based tick synchronization. In the other network partition(s), decentralized tick synchronization is used, starting with the first synchronization phase without master tick frames. The situation is equivalent to master node failure (see above) and may be treated likewise.

Network merging:

If networks meet, they merge into one tick synchronized network. Among the nodes of different networks, however, there is a lack of tick synchronization. This may be detected by receiving unexpected tick frames of the other network, or by collisions of regular frames in reserved micro slots. Note that black bursts may be shorter than regular frames; they may be detected by using the CCA mechanism only. Each node detecting another network may send a jamming frame (a reserved sequence of black bursts) in a predefined micro slot, which will be repeated by all receiving nodes (similar to master tick frames). After transmission of a jamming frame, non-master nodes stop sending tick frames. The previous master nodes may determine a random number $n_{random}$ each, and may start acting as master node $d_{syncPhase} * n_{random}$ after the beginning of the last macro slot. The first node starting the tick frame sequence may become the new master node; network-wide tick synchronization is established after one synchronization phase.

According to a further example there may be provided a method for tick-synchronizing a node of a wireless multi-hop network with at least one other node of said multi-hop network, said network comprising a plurality of nodes being arbitrarily connected, said method may comprise the steps of:

receiving a synchronization tick frame from a node, said synchronization tick frame containing a round number $n_{round}$, said round number $n_{round}$ representing the number of hops $n_{hops}$ said synchronization tick frame has performed since its generation;

determining a node reference tick $t_{syncNode}$ corresponding to a master reference tick $t_{syncMaster}$ using said predetermined round number $n_{round}$ and the start time $t_{rxTick}$ of receipt of said synchronization tick frame in said node (N1-N14).

Said synchronization tick frame may comprise at least one bit and said at least one bit is encoded with a black burst during transmission.

Said step of receiving may comprise performing a clear channel assessment by which it is determined whether the transmission medium is busy.

Said step of receiving may comprise detecting the energy level on the transmission medium.

The value of said at least one bit of said synchronization tick frame may be determined on the basis of the detected energy level on the transmission medium.

Said synchronization tick frame may be generated by a master node and said master reference tick $t_{syncMaster}$ is the time at which said master node sent said synchronization tick frame.

Said network may have a maximal diameter of $n_{hopsMax}$ hops and said synchronization tick frame may contain at least as many bits to binarily code $n_{hopsMax}$.

Said synchronization tick frame may be sent to all nodes within transmission range.

Said method may further comprise the step of:

determining whether said node has already received a synchronization tick frame.

Said network may be a wireless ad-hoc network.

According to another example there may be provided a method for tick-synchronizing a node of a wireless multi-hop network with at least one other node of said multi-hop network, said network comprising a plurality of nodes being arbitrarily connected, said method may comprise the steps of:

generating a synchronization tick frame, said synchronization tick frame containing a round number, said round number $n_{round}$ representing the number of hops said synchronization tick frame has performed since its generation; sending said synchronization tick frame.

Said steps may be performed periodically.

According to another example there may be provided a computer program product comprising computer readable instructions, which when loaded and run on a computer system and/or computer network system, causes the computer system and/or the computer network system to perform operations according to a method of anyone of the preceding claims.

According to another example there may be provided a system comprising:

a first node and a second node,
said first node being connected with said second node, said first node having circuitry for generating a synchronization tick frame, said synchronization tick frame containing a round number, said round number $n_{round}$ representing the number of hops said synchronization tick frame has performed since its generation and circuitry for sending said synchronization tick frame to said second node;
said second node having circuitry for receiving a synchronization tick frame from a node, said synchronization tick frame containing a round number, said round number $n_{round}$ representing the number of hops $n_{hops}$ said synchronization tick frame has performed since its generation, circuitry for determining a node reference tick $t_{syncNode}$ corresponding to a master reference tick $t_{syncMaster}$ using said predetermined round number and the start time $t_{rxTick}$ of receipt of said synchronization tick frame in said node, and having circuitry for using said determined node reference tick for tick-synchronizing said node.

According to another example there may be provided a method for time-synchronizing a node of a wireless multi-hop network with at least one other node of said multi-hop network, said method comprising the steps of the method for tick synchronizing a node as described above,

wherein said method further comprises the step of
receiving a clock value referring to a reference point in time.

The method may further comprise the step of sending said clock value referring to a reference point in time.

According to another example there may be provided a method for time-synchronizing a node of a wireless multi-hop network with at least one other node of said multi-hop network said method comprising the steps of the method for tick synchronizing a node as described above,

wherein said method further comprises the step of sending said clock value referring to a reference point in time.

**List of Reference Numerals**

| | |
|---|---|
| 10 | network |
| N1-N14 | nodes |
| E | edges |

**Claims**

1. A method for tick-synchronizing a node (N1-N14) of a wireless multi-hop network with at least one other node (N1-N14) of said multi-hop network during a synchronization phase, tick-synchronizing being concerned with establishing reference ticks, said reference ticks being global reference points in time to which all nodes in said network are synchronized without exchanging clock values, wherein a synchronization phase comprises at least one round, said network comprising a plurality of nodes (N1-N14) being arbitrarily connected, said method comprising the steps of:

   receiving a synchronization tick frame from a node (N1-N14),
   determining a node reference tick $t_{syncNode}$ using a round number $n_{round}$ and the start time $t_{rxTick}$ of receipt of said synchronization tick frame in said node (N1-N14),
   wherein said round number $n_{round}$ is indicative of the current round of said synchronization phase.

2. The method according to claim 1, wherein
   said received synchronization tick frame contains said round number $n_{round}$ and said round number $n_{round}$ represents the number of hops $n_{hops}$ said synchronization tick frame has performed between nodes of said network since its generation or
   wherein said round number $n_{round}$ is determined by said node receiving said synchronization tick frame.

3. The method according to one of the preceding claims, wherein said node reference tick $t_{syncNode}$ corresponds to a master reference tick $t_{syncMaster}$.

4. The method according to claim 3, wherein said synchronization tick frame is generated by a master node (N1) and said master reference tick $t_{syncMaster}$ is the time at which said master node (N1) sent said synchronization tick frame.

5. The method according to one of the preceding claims, wherein said network has maximal diameter of $n_{hopsMax}$ hops, said method further comprising the steps of:

   determining whether the number of elapsed rounds of the present synchronization phase is inferior to $n_{hopsMax}$;
   if the number of elapsed rounds is inferior to $n_{hopsMax}$

      incrementing said round number $n_{round}$ by 1; and
      sending a synchronization tick frame.

6. The method according to claim 5, wherein said synchronization tick frame is sent to all nodes (N1-N14) within transmission range and/or wherein said synchronization tick frame is sent at scheduled points in time.

7. The method according to one of the preceding claims, wherein said synchronization tick frame comprises a master tick frame used for master based tick synchronizationand/or a decentralized tick frame used for decentralized tick synchronization.

8. The method according to one of the preceding claims, further comprising the step of:

   determining whether said node (N1-N14) has already received a synchronization tick frame in said synchronization phase.

9. The method according to one of the preceding claims, wherein said synchronization tick frame comprises at least one bit and said at least one bit is encoded with a black burst during transmission.

10. The method according to claim 9, wherein said step of receiving comprises performing a clear channel assessment by which it is determined whether the transmission medium is busy.

11. The method according to claim. 9 or 10, wherein said step of receiving comprises detecting the energy level on the transmission medium or wherein said step of receiving comprises detecting a signal with specific modulation and/or spreading characteristics on the transmission medium.

12. The method according to claim 11, wherein the value of said at least one bit of said synchronization tick frame is determined only on the basis of the detected energy level on the transmission medium.

13. Computer program product comprising computer readable instructions, which when loaded and run in a computer and/or computer network system, causes the computer system and/or the computer network system to perform operations according to a method of anyone of the preceding claims.

14. A system comprising:

a first node (N1-N14) and a second node (N1-N14),
said first node (N1-N14) being connected with said second node (N1-N14), said first node (N1-N14) having circuitry for generating a synchronization tick frame, tick-synchronization being concerned with establishing reference ticks, said reference ticks being global reference points in time to which all nodes in said network are synchronized without exchanging clock values;
said second node (N1-N14) having circuitry for receiving a synchronization tick frame from a node (N1-N14), circuitry for determining a node reference tick using a round number $n_{round}$ and the start time $t_{rxTick}$ of receipt of said synchronization tick frame in said node (N1-N14), and having circuitry for using said determined node reference tick for tick-synchronizing said node (N1-N14);
wherein said round number $n_{round}$ is indicative of the current round of said synchronization phase.

15. A method for time-synchronizing a node (N1-N14) of a wireless multi-hop network with at least one other node (N1-N14) of said multi-hop network, said method comprising the steps of the method for tick synchronizing a node according to one of claims 1 to 12,
wherein said method further comprises the step of receiving a clock value referring to a reference point in time.

**Patentansprüche**

1. Ein Verfahren, um eine *tick*-Synchronisation (*tick-synchronizing*) für einen Knoten (N1 - N14) eines drahtlosen Mehrstrecken-Netzwerks (*multi-hop networks*) mit mindestens einem weiteren Knoten (N1 - N14) des genannten Mehrstrecken-Netzwerks während einer Synchronisationsphase vorzunehmen, wobei sich die *tick*-Synchronisation mit dem Erstellen von Referenz-*ticks* (*reference ticks*) befasst, wobei die genannten Referenz-*ticks*, zeitlich gesehen, globale Bezugspunkte sind, auf die bezogen alle Knoten im genannten Netzwerk ohne Austausch eines Taktwertes (*clock value*) synchronisiert werden, wobei eine Synchronisationsphase mindestens eine Runde (*round*) umfasst, wobei das genannte Netzwerk eine Vielzahl an auf beliebige Weise verbundenen Knoten (N1 - N14) umfasst, wobei das genannte Verfahren die folgende Schritte umfasst:

Empfangen von einem Knoten (N1 - N14) eines Synchronisations-*tick- frame* (*synchronisation tick frame*),
Bestimmen eines Knoten-Referenz-*ticks* (*node reference tick*) $t_{syncNode}$ unter Verwendung einer Rundennummer (*round number*) $n_{round}$ und der Empfangs-Startzeit $t_{rxTick}$ des genannten Synchronisations-*tick-frames* am genannten Knoten (N1 - N14),
wobei die genannte Rundennummer $n_{round}$ auf die aktuelle Runde der genannten Synchronisationsphase schließen lässt.

2. Das Verfahren nach Anspruch 1, wobei
der genannte empfangene Synchronisations-*tick-frame* die genannte Rundennummer $n_{round}$ enthält und die genannte Rundennummer $n_{round}$ die Anzahl an *hops* $n_{hops}$ darstellt, die der genannte Synchronisations-*tick-frame* zwischen den Knoten des genannten Netzwerks seit seiner Erstellung ausgeführt hat oder
wobei die genannte Rundennummer $n_{round}$ durch den genannten Knoten bestimmt wird, der den genannten Synchronisations-*tick-frame* empfängt.

3. Das Verfahren nach einem der vorhergehenden Ansprüche, wobei der genannte Knoten-Referenz-*tick* $t_{syncNode}$ einem Haupt-Referenz-*tick* (*master reference tick*) $t_{syncMaster}$ entspricht.

4. Das Verfahren nach Anspruch 3, wobei der genannte Synchronisations-*tick-frame* durch einen Hauptknoten (*master node*) (N1) generiert wird und der genannte Haupt-Referenz-*tick* $t_{syncMaster}$ die Zeit ist, zu der der genannte Hauptknoten (N1) den genannten Synchronisations-*tick-frame* abgeschickt hat.

5. Das Verfahren nach einem der vorhergehenden Ansprüche, wobei das genannte Netzwerk einen maximalen Durchmesser von $n_{hopdMax}$ hops besitzt, wobei das genannte Verfahren des Weiteren die folgenden Schritte umfasst:

   Bestimmen ob die Anzahl der verstrichenen Runden der aktuellen Synchronisationsphase unterhalb von $n_{nopsMax}$ liegt;
   wenn die Anzahl der verstrichenen Runden unterhalb von $n_{nopsMax}$ liegt

      Erhöhen um 1 der genannten Rundennummer $n_{round}$; und
      Senden eines Synchronisations-*tick-frames*.

6. Das Verfahren nach Anspruch 5, wobei der genannte Synchronisations-*tick-frame* an alle Knoten (N1 - N14) innerhalb des Sendebereichs geschickt wird und/oder wobei der genannte Synchronisations-*tick-frame* zu geplanten Zeitpunkten gesendet wird.

7. Das Verfahren nach einem der vorhergehenden Ansprüche, wobei der genannte Synchronisations-*tick-frame* einen *master tick frame* umfasst, der zur *master*-basierten *tick*-Synchronisation verwendet wird und/oder einen dezentralisierten *tick frame,* der zur dezentralisierten *tick*-Synchronisation verwendet wird.

8. Das Verfahren nach einem der vorhergehenden Ansprüche, das des Weiteren folgende Schritte umfasst:

   Bestimmen ob der genannte Knoten (N1 - N14) schon einen Synchronisations-*tick-frame* in der genannten Synchronisationsphase empfangen hat.

9. Das Verfahren nach einem der vorhergehenden Ansprüche, wobei der genannte Synchronisations-*tick-frame* mindestens ein *bit* umfasst und wobei das genannte oder die genannten *bit* mit einem *black burst* während der Übertragung codiert sind.

10. Das Verfahren nach Anspruch 9, wobei der genannte Empfangs-Verfahrensschritt umfasst, eine Beurteilung der Kanalfreiheit (*clear channel assessment*) durchzuführen, durch die festgestellt wird, ob das Übertragungsmedium belegt (*busy*) ist.

11. Das Verfahren nach Anspruch 9 oder 10, wobei der genannte Empfangs-Verfahrensschritt umfasst, den Energiepegel im Übertragungsmedium zu ermitteln, oder wobei der genannte Empfangs-Verfahrensschritt die Erfassung eines Signals mit einer spezifischen Modulations- und/oder Ausbreitungs-Charakteristik im Übertragungsmedium umfasst.

12. Das Verfahren nach Anspruch 11, wobei der Wert des einen oder der mehreren genannten bit des Synchronisations-*tick*-frames nur anhand des erkannten Energiepegels im Übertragungsmedium bestimmt wird.

13. Ein Computerprogrammprodukt, das computerlesbare Anweisungen umfasst, die, wenn sie in einen Computersystem und/oder in ein Computernetzwerksystem geladen und ausgeführt werden, das Computersystem und/oder Computernetzwerksystem dazu veranlassen, Operationen auszuführen entsprechend eines Verfahrens nach einem der vorhergehenden Ansprüchen.

14. Ein System, das Folgendes umfasst:

   einen ersten Knoten (N1 - N14) und einen zweiten Knoten (N1 - N14),
   wobei der genannte erste Knoten (N1 - N14) mit dem genannten zweiten Knoten (N1 - N14) verbunden wird,
   wobei der genannte erste Knoten (N1 - N14) Schaltkreise aufweist, um einen Synchronisations-*tick-frame* zu generieren, wobei sich die *tick*-Synchronisation mit dem Erstellen von Referenz-*ticks* befasst, wobei die genannten Referenz-*ticks*, zeitlich gesehen, globale Bezugspunkte sind, auf die bezogen alle Knoten im genannten Netzwerk ohne Austausch von Taktwerten (*clock values*) synchronisiert werden;

wobei der genannte zweite Knoten (N1 - N14) Schaltkreise aufweist, um einen Synchronisations-*tick*-frame von einem Knoten (N1 - N14) zu empfangen, Schaltkreise, um einen Knoten-Referenz-*tick* $t_{syncNode}$ unter Verwendung einer Rundennummer $n_{round}$ und der Empfangs-Startzeit $t_{rxTick}$ des genannten Synchronisations-*tick*-*frames* am genannten Knoten (N1 - N14) zu bestimmen, Schaltkreise, um der genannten ermittelten Knoten-Referenz-*tick* zur *tick*-Synchronisation des genannten Knotens (N1 - N14) zu verwenden;

wobei die genannte Rundennummer $n_{round}$ auf die aktuelle Runde der genannten Synchronisationsphase schließen lässt.

**15.** Ein Verfahren zur Zeitsynchronisation eines Knotens (N1 - N14) eines drahtlosen Mehrstrecken-Netzwerks mit mindestens einem weiteren Knoten (N1 - N14) des genannten Mehrstrecken-Netzwerks, wobei das genannte Verfahren die Schritte des Verfahrens zur *tick*-Synchronisation eines Knotens nach einem der Ansprüche von 1 bis 12 umfasst,

wobei das genannte Verfahren des Weiteren den Schritt umfasst,

einen Taktwert zu empfangen, der sich auf einen Referenzpunkt in der Zeit bezieht.

## Revendications

**1.** Un procédé pour la synchronisation par tics (*tick-synchronisation*) d'un noeud (N1 - N14) d'un réseau à sauts multiples (*multi-hop*) sans fil avec au moins un autre noeud (N1 - N14) du dit réseau à sauts multiples pendant une phase de synchronisation, la synchronisation par tics concernant l'établissement de tics de référence (*reference ticks*), les dits tics de référence étant des point de référence globale dans le temps par rapport auxquels tous les noeuds dans le dit réseau sont synchronisés sans échanger des valeurs d'horloge, sachant qu'une phase de synchronisation comprend au moins un cycle (*round*), que le dit réseau comprend une pluralité de noeuds (N1 - N14) étant connectés de manière arbitraire, sachant que le dit procédé comprend les étapes suivantes :

recevoir un *tick frame* de synchronisation à partir d'un noeud (N1 - N14),

déterminer un tic de référence de noeud (*node reference tick*) $t_{syncNode}$ en utilisant un nombre de cycles $n_{round}$ et le temps de début $t_{rxTick}$ de la réception du dit *tick frame* de synchronisation dans le dit noeud (N1 - N14),

sachant que le dit nombre de cycles $n_{round}$ est indicatif pour le cycle actuel de la dite phase de synchronisation.

**2.** Le procédé d'après la revendication 1, sachant que

le dit *tick frame* de synchronisation reçu contient le dit nombre de cycle $n_{round}$ et que le dit nombre de cycles $n_{round}$ représente le nombre de sauts (hops) que le dit *tick frame* de synchronisation a effectué entre les noeuds du dit réseau depuis sa génération ou

sachant que le dit nombre de cycles $n_{round}$ est déterminé par le dit noeud recevant le dit tick frame de synchronisation.

**3.** Le procédé d'après une des revendications précédentes, sachant que le dit tic de référence de noeud $t_{syncNode}$ correspond à un tic de référence maître (*master*) $t_{syncMaster}$.

**4.** Le procédé d'après la revendication 3, sachant que le dit *tick frame* de synchronisation est généré par un noeud maître (*master node*) (N1) et que le dit tic de référence maître $t_{syncMaster}$ représente le moment où le dit noeud maître (N1) a envoyé le dit *tick frame* de synchronisation.

**5.** Le procédé d'après une des revendications précédentes, sachant que le dit réseau présente un diamètre maximal de $n_{hopsMax}$ sauts, sachant que le dit procédé comprend en outre les étapes suivantes :

déterminer si le nombre de cycles écoulés de la phase actuelle de synchronisation est inférieur à $n_{hopsMax}$ ;

si le nombre de cycles écoulés est inférieur à $n_{hopsMax}$

augmenter de 1 le dit nombre de cycle $n_{round}$ ; et

envoyer un *tick frame* de synchronisation.

**6.** Le procédé d'après la revendication 5, sachant que le dit *tick frame* de synchronisation est envoyé à tous les noeuds (N1 - N14) dans le domaine de transmission et/ou sachant que le dit *tick frame* de synchronisation est envoyé à des moments programmés.

**7.** Le procédé d'après une des revendications précédentes, sachant que le dit *tick frame* de synchronisation comprend un *tick frame* maître (*master tick frame*) utilisé pour la synchronisation par tics fondée sur un système maître (*master based*) utilisé et/ou un *tick frame* décentralisé utilisé pour une synchronisation par tics décentralisée.

**8.** Le procédé d'après une des revendications précédentes, comprenant en outre les étapes suivantes :

déterminer si le dit noeud (N1 - N14) a déjà reçu un *tick frame* de synchronisation dans la dite phase de synchronisation.

**9.** Le procédé d'après une des revendications précédentes, sachant que le dit *tick frame* de synchronisation comprend au moins un *bit* et que le ou les *bit* nommés sont codés avec un signal de référence (*black burst*) pendant la transmission.

**10.** Le procédé d'après la revendication 9, sachant que la dite étape de réception comprend le fait d'effectuer une évaluation de disponibilité de canal (*clear channel assessment*) par laquelle on constate si le milieu transmitif est occupé.

**11.** Le procédé d'après la revendication 9 ou 10, sachant que la dite étape de réception comprend la détection du niveau d'énergie dans le milieu transmitif ou bien sachant que la dite étape de réception comprend la détection d'un signal présentant une caractéristique de modulation et/ou de diffusion (*spreading*) spécifique dans le milieu transmitif.

**12.** Le procédé d'après la revendication 11, sachant que la valeur du ou des *bit* nommés du dit *tick frame* de synchronisation est déterminée uniquement d'après le niveau d'énergie détecté dans le milieu transmitif.

**13.** Programme d'ordinateur en tant que produit comprenant des instructions lisibles par ordinateur, lesquelles, quand elles sont chargées et exécutées dans un système informatique et/ou dans un système de réseau informatique, amènent le système informatique et/ou le système de réseau informatique à effectuer des opérations selon un procédé d'après une des revendications précédentes.

**14.** Un système comprenant:

un premier noeud (N1 - N14) et un deuxième noeud (N1 - N14) ;
le dit premier noeud (N1 - N14) étant relié au dit deuxième noeud (N1 - N14), sachant que le dit premier noeud (N1 - N14) présente une circuiterie pour générer un *tick frame* de synchronisation, la synchronisation par tics concernant l'établissement de tics de référence, les dits tics de référence étant des point de référence globale dans le temps par rapport auxquels tous les noeuds dans le dit réseau sont synchronisés sans échanger des valeurs d'horloge,
sachant que le deuxième noeud (N1 - N14) présente une circuiterie pour recevoir un *tick frame* de synchronisation à partir d'un noeud (N1 - N14), une circuiterie pour déterminer un tic de référence de noeud en utilisant un nombre de cycles $n_{round}$ et le temps de début $t_{rxTick}$ de la réception du dit *tick frame* de synchronisation dans le dit noeud (N1 - N14), et présente une circuiterie pour utiliser le dit tic de référence de noeud déterminé pour la synchronisation par tics du dit noeud (N1 - N14) ;
sachant que le dit nombre de cycles $n_{round}$ est indicatif pour le cycle actuel de la dite phase de synchronisation.

**15.** Un procédé pour la synchronisation du temps d'un noeud (N1 - N14) d'un réseau à sauts multiples sans fil avec au moins un autre noeud (N1 - N14) du dit réseau à sauts multiples, le dit procédé comprenant les étapes du procédé pour la synchronisation par tics d'un noeud d'après une des revendications de 1 à 12,
sachant que le dit procédé comprend en outre l'étape concernant
la réception d'une valeur d'horloge se rapportant à un point de référence dans le temps.

FIG. 1

FIG. 2A

FIG. 2B

N5

N13

N14

N2    N6

N11

N3    N1

N12

N4

N8

N10

N7

N9

# FIG. 2C

N5

N13

N14

N2    N6

N11

N3    N1

N12

N4

N8

N10

N7

N9

# FIG. 2D

START

S10 — SYNC PHASE COMPLETED? —YES→ END

NO

S11 — TICK FRAME RECEIVED? —NO→

YES

S12 — OTHER TICK FRAME RECEIVED? —YES→ S14 DISCARD RECEIVED TICK FRAME

NO

S16 DETERMINE ROUND NUMBER

S18 CALCULATE NODE REFERENCE TICK

S20 — MORE NODES TO BE SYNCHRONIZED? —NO→

YES

S22 INCREMENT ROUND NUMBER

S24 SEND TICK FRAME WITH INCREMENTED ROUND NUMBER

FIG. 3

START

S50

SYNC PHASE
COMPLETED?

YES → END

NO

S52

TICK FRAME
RECEIVED?

YES → DISCARD RECEIVED TICK FRAME    S54

NO

S56

SEND TICK FRAME

# FIG. 4

$d_{macroSlot}$    SP    MSL

R1    R2    R3    R4    R5    R6

$d_{round}$

$d_{round} \cdot (n_{round} - 1)$    $d_{round} \cdot (n_{hopsMax} - n_{round} + 1)$

$d_{syncPhase} = d_{round} \cdot n_{hopsMax}$

# FIG. 5

| 1 | k | m |
|---|---|---|
| SOBF=1 | $n_{round}$ | CRC |

# FIG. 6

$$d_{creation} \quad d_{access} \quad d_{tx}$$

$$d_{prop} \quad d_{rx} \quad d_{rxProc}$$

$$t_1 \qquad t_2 \quad t_2' \qquad\qquad t_3$$

# FIG. 7

decentralized
tick frame

master-based tick frame

| 2 | 1 | k | m |
|---|---|---|---|
| DS | MP | $n_{round}$ | CRC |

# FIG. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2006056174 A1
- WO 2006067271 A1
- US 20060072694 A1

**Non-patent literature cited in the description**

- **J. Elson ; L. Girod ; D. Estrin.** Fine-Grained Network Time Synchronization using Reference Broadcasts. *Proceedings of the Fifth Symposium on Operating Systems Design and Implementation (OSDI 2002),* 2002
- **S. Ganeriwal ; R. Kumar ; M. B. Srivastava.** Timing-sync Protocol for Sensor Networks. *SenSys'03,* 05 November 2003
- **M. L. Sichitiu ; C. Veerarittiphan.** Simple, Accurate Time Synchronization for Wireless Networks. *Proceedings of the IEEE Wireless Communications and Networking Conference (WCNC 2003),* 2003, 1266-1273
- **W. Su ; I. Akyildiz.** Time-Diffusion Synchronization Protocols for Sensor Networks. *IEEE/ACM Transactions on Networking,* April 2005, vol. 13 (2), 384-397